(19) Europäisches Patentamt / European Patent Office / Office européen des brevets

(11) **EP 4 668 821 A1**

(12) **EUROPEAN PATENT APPLICATION**
published in accordance with Art. 153(4) EPC

(43) Date of publication:
**24.12.2025 Bulletin 2025/52**

(21) Application number: **23922753.1**

(22) Date of filing: **16.02.2023**

(51) International Patent Classification (IPC):
**H04W 16/28** (2009.01)    **H04W 24/10** (2009.01)

(52) Cooperative Patent Classification (CPC):
**H04W 16/28; H04W 24/10**

(86) International application number:
**PCT/JP2023/005607**

(87) International publication number:
**WO 2024/171417 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NTT DOCOMO, INC.
Tokyo 100-6150 (JP)**

(72) Inventor: **SHIMODAIRA Hidekazu
Tokyo 100-6150 (JP)**

(74) Representative: **Hoffmann Eitle
Patent- und Rechtsanwälte PartmbB
Arabellastraße 30
81925 München (DE)**

(54) **TERMINAL AND WIRELESS COMMUNICATION METHOD**

(57)    A terminal simultaneously receives a synchronization signal block or a reference signal using a plurality of reception systems. The terminal reduces a number of samples used for measurement, when the terminal receives the synchronization signal block or the reference signal using the plurality of reception systems in a second frequency range having a frequency band which is higher than a frequency band of a first frequency range, compared to when the terminal receives the synchronization signal block or the reference signal using a single reception system in the second frequency range. The terminal reduces the number of samples when a group-based beam reporting function is applied.

FIG. 5

**Description**

TECHNICAL FIELD

The present disclosure relates to a terminal and a radio communication method for supporting enhancement of radio resource management.

BACKGROUND ART

The 3rd Generation Partnership Project (3GPP: registered trademark) has prepared a specification for the 5th generation mobile communication system (also referred to as 5G, New Radio (NR), or Next Generation (NG)), and further a specification for a next-generation system referred to as Beyond 5G, 5G Evolution, or 6G is also being prepared.

3GPP Release 18 states that, regarding radio resource management (RRM), enhancement of simultaneous reception using a plurality of reception systems (Rx chains) in FR 2 (Frequency Range 2) will be investigated (Non-Patent Literature 1).

Releases up to 3GPP Release 17 specify and assume that it is not possible to simultaneously receive a plurality of beams, and it is not possible to simultaneously measure Radio Link Monitoring (RLM), and RRM and Measurement Gap (MG) in the FR 2. Therefore, consideration is given to support restrictions in the FR 2 by introducing scaling factors in various specifications on the RRM and the like.

CITATION LIST

NON-PATENT LITERATURE

Non-Patent Literature 1: "Requirement for NR frequency range 2 (FR2) multi-Rx chain DL reception", RP-221753, 3GPP TSG RAN Meeting #96, 3GPP, June 2022

SUMMARY OF INVENTION

However, there is a problem that a relatively long time is required for measurement performed by by a terminal (User Equipment, UE) due to the scaling factors described above being applied to the FR 2.

Therefore, the following disclosure has been made in view of this kind of situation, and an object of the disclosure is to provide a terminal which can perform an operation related to faster measurement, even when a high frequency band such as an FR 2 is used, and a radio communication method.

One aspect of the present disclosure provides a terminal (UE 200) including: a reception unit (control signal and reference signal processing unit 240) that simultaneously receives a synchronization signal block or a reference signal using a plurality of reception systems; and a control unit (control unit 270) that reduces a number of samples used for measurement, when the synchronization signal block or the reference signal is received using the plurality of reception systems in a second frequency range having a frequency band which is higher than a frequency band of a first frequency range, compared to when the synchronization signal block or the reference signal is received using a single reception system in the second frequency range, in which the control unit reduces the number of samples when a group-based beam reporting function is applied.

One aspect of the present disclosure provides a terminal (UE 200) including: a reception unit (control signal and reference signal processing unit 240) that simultaneously receives a synchronization signal block or a reference signal using a plurality of reception systems; and a control unit (control unit 270) that applies a common transmission configuration indication for the plurality of reception systems, when the synchronization signal block or the reference signal is received using the reception systems in a second frequency range having a frequency band which is higher than a frequency band of a first frequency range, in which the control unit applies the common transmission configuration indication for the plurality of reception systems, when a group-based beam reporting function is applied.

One aspect of the present disclosure provides a terminal (UE 200) including: a reception unit (control signal and reference signal processing unit 240) that simultaneously receives a synchronization signal block or a reference signal using a plurality of reception systems; and a control unit (control unit 270) that applies a separate transmission configuration indication for each of the plurality of reception systems, when the synchronization signal block or the reference signal is received using the plurality of reception systems in a second frequency range having a frequency band which is higher than a frequency band of a first frequency range, in which the control unit applies the separate transmission configuration indication for each of the plurality of reception systems, when a group-based beam reporting function is applied.

One aspect of the present disclosure provides a radio communication method including: a step of simultaneously receiving a synchronization signal block or a reference signal using a plurality of reception systems; and a step of reducing a number of samples used for measurement, when the synchronization signal block or the reference signal is received using the plurality of reception systems in a second frequency range having a frequency band which is higher than a frequency band of a first frequency range, compared to when the synchronization signal block or the reference signal is received using a single reception system in the second frequency range, in which in the step of reducing the number of samples, the number of samples is reduced when a group-based beam reporting function is applied.

BRIEF DESCRIPTION OF DRAWINGS

[FIG. 1] FIG. 1 is an overall schematic configuration diagram of a radio communication system 10.

[FIG. 2] FIG. 2 is a diagram showing a frequency band used in the radio communication system 10.

[FIG. 3] FIG. 3 is a diagram showing configuration examples of radio frames, subframes, and slots used in the radio communication system 10.

[FIG. 4] FIG. 4 is a functional block diagram of a gNB 100 and a UE 200.

[FIG. 5] FIG. 5 is a diagram showing a configuration example of an SSB, and an SMTC and MG according to Operation Example 1-1.

[FIG. 6] FIG. 6 is a diagram showing a configuration example of an SSB, and an SMTC and MG according to Operation Example 1-2.

[FIG. 7] FIG. 7 is a diagram showing a configuration example of an SSB, and an SMTC and MG according to Operation Example 1-3.

[FIG. 8] FIG. 8 is a diagram showing a configuration example of an SSB, and an SMTC and MG according to Operation Example 1-4.

[FIG. 9] FIG. 9 is a diagram showing a configuration example of an SSB, and an SMTC and MG according to Operation Example 1-5.

[FIG. 10] FIG. 10 is a diagram showing a configuration example of an SSB, and an SMTC and MG according to Operation Example 1-6.

[FIG. 11] FIG. 11 is a diagram showing a configuration of an evaluation period ($T_{Evaluate\_CBD\_SSB}$ / $T_{Evaluate\_CBD\_CSI-RS}$) during which a scaling factor $P_{TRP}$ is referred.

[FIG. 12] FIG. 12 is a diagram showing a list (example) of groupBasedBeamReporting functions.

[FIG. 13] FIG. 13 is a diagram showing an example of a hardware configuration of the gNB 100 and the UE 200.

[FIG. 14] FIG. 14 is a diagram showing a configuration example of a vehicle 2001.

DESCRIPTION OF EMBODIMENTS

An embodiment will be explained below with reference to the accompanying drawings. Note that the same or similar reference numerals have been attached to the same functions and configurations, and the description thereof will be omitted as appropriate.

(1) Overall schematic configuration of radio communication system

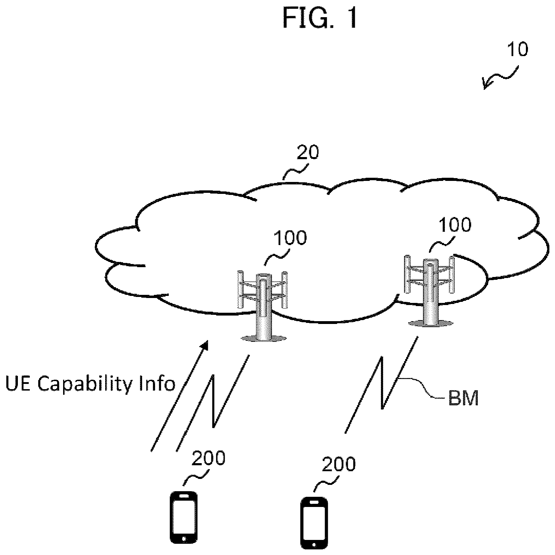

FIG. 1 is an overall schematic configuration diagram of a radio communication system 10 according to the present embodiment. The radio communication system 10 is in accordance with 5G New Radio (NR), and includes a Next Generation-Radio Access Network 20 (hereinafter referred to as NG-RAN 20) and a terminal 200 (hereinafter referred to as UE 200, User Equipment, UE). The radio communication system 10 may be in accordance with a method referred to as Beyond 5G, 5G Evolution, or 6G.

The NG-RAN 20 includes a radio base station 100 (hereinafter referred to as gNB 100). The specific configuration of the radio communication system 10 including the number of gNBs and UEs is not limited to an example shown in FIG. 1.

The NG-RAN 20 actually includes a plurality of NG-RAN Nodes, specifically gNBs (or ng-eNBs), and is connected to a core network in accordance with 5G (hereinafter referred to as 5GC, not shown). The NG-RAN 20 and 5GC may simply be expressed as a "network".

The gNB 100 is a radio base station in accordance with 5G, and performs radio communication in accordance with 5G with the UE 200. The gNB 100 and UE 200 can support Massive Multiple-Input Multiple-Output (MIMO) in which an antenna beam (hereinafter referred to as beam BM) with higher directivity is generated by controlling radio signals transmitted from a plurality of antenna elements, carrier aggregation (CA) in which a plurality of component carriers (CCs) are bundled and used, dual connectivity (DC) in which communication is performed simultaneously between the UE and each of the two NG-RAN Nodes, and the like.

The type of DC may be Multi-RAT Dual Connectivity (MR-DC), which uses a plurality of radio access technologies, or NR-NR Dual Connectivity (NR-DC), which uses only NR. Further, the MR-DC may be E-UTRA-NR Dual Connectivity (EN-DC) in which an eNB constitutes a master node (MN), and a gNB constitutes a secondary node (SN), or may be NR-E-UTRA Dual Connectivity (NE-DC) which refers to the opposite.

Any gNB 100 may constitute a master node (MN), and another gNB 100 may constitute a secondary node (SN).

In the DC, a master cell group (MCG) and a secondary cell group (SCG) may be configured. The MCG may include a primary cell (PCell), and the SCG may include a secondary cell (SCell).

Further, the SCell may include a primary secondary cell (PSCell). The PSCell is a type of SCell, but may be interpreted as a special SCell that has a function equivalent to that of a PCell. Similarly to the PCell, in the PSCell, the following may be performed: transmission of a Physical Uplink Control Channel (PUCCH), contention based random access procedures (CBRA), and functions of Radio Link Monitoring (downlink radio quality monitoring).

The gNB 100 can transmit a plurality of beams BM with different transmission directions (may be referred to simply as direction, or radiation direction or coverage) in a space-division and time-division manner. The gNB 100 may transmit the plurality of beams BM simultaneously.

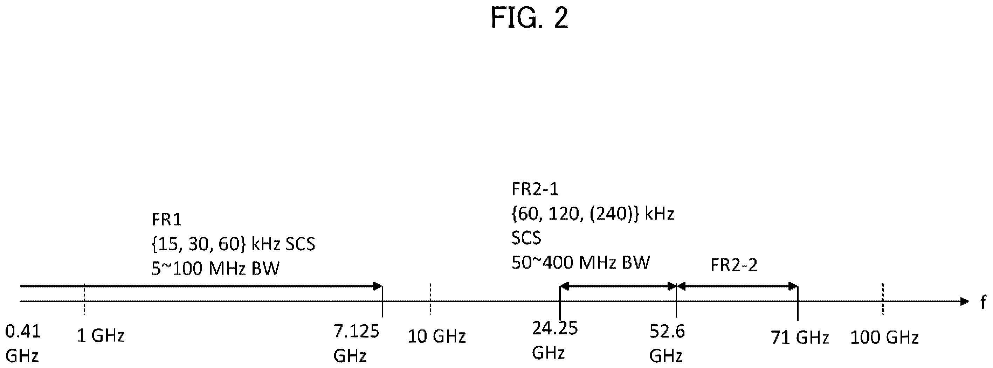

Further, the radio communication system 10 may support a plurality of frequency ranges (FRs). FIG. 2 shows frequency bands used in the radio communication system 10.

- FR 1: 410 MHz to 7.125 GHz

- FR 2

    - FR 2-1: 24.25 GHz to 52.6 GHz

    - FR 2-2: more than 52.6 GHz and 71 GHz or less

In the FR 1, Subcarrier Spacing (SCS) of 15, 30, or 60 kHz is used, and a bandwidth (BW) of 5 to 100 MHz may be used. The FR 2 is higher than the FR 1, a subcarrier spacing (SCS) of 60 or 120 kHz (240 kHz may be included) is used, and a bandwidth (BW) of 50 to 400 MHz may be used.

The SCS may be interpreted as numerology. The numerology is defined in 3GPP TS38.300 and corresponds to one subcarrier spacing in a frequency domain.

Further, the radio communication system 10 may also support a frequency band which is higher than a frequency band of the FR 2-2.

When a band of more than 52.6 GHz is used, Cyclic Prefix-Orthogonal Frequency Division Multiplexing (CP-OFDM)/Discrete Fourier Transform - Spread (DFT-S-OFDM) with larger Subcarrier Spacing (SCS) may be applied.

Further, in a high frequency band such as that of the FR 2-2 as described above, an increase in phase noise between carriers becomes a problem. Therefore, it may be necessary to apply the larger (wider) SCS or a single carrier waveform.

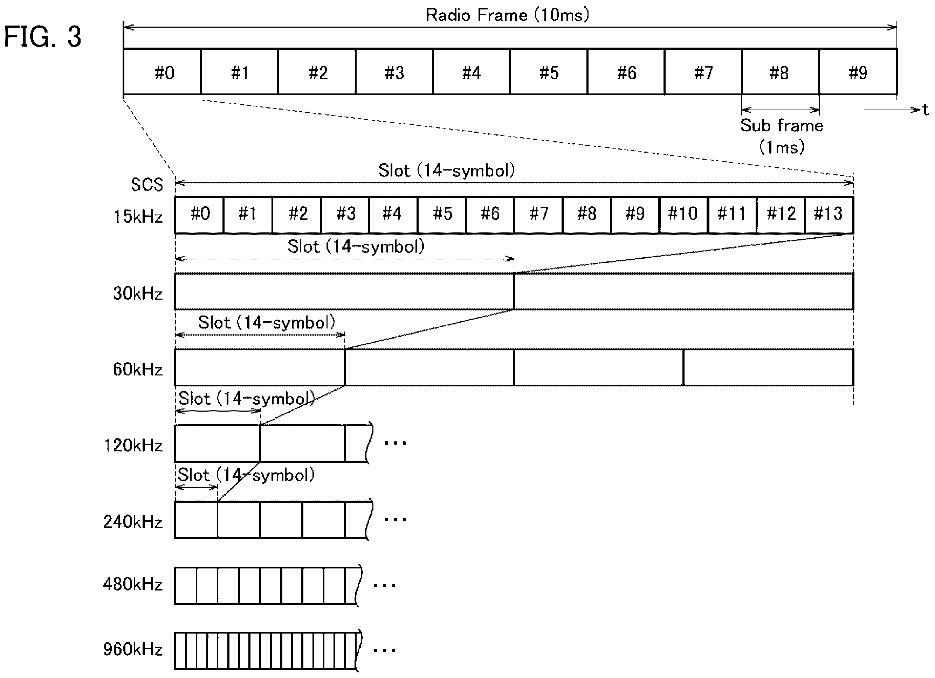

The larger the SCS, the shorter a symbol/Cyclic Prefix (CP) period and a slot period (when a configuration of one slot having 14 symbols is maintained). FIG. 3 shows configuration examples of radio frames, subframes, and slots used in the radio communication system 10.

When the configuration of one slot having 14 symbols is maintained, the larger (wider) the SCS, the shorter the symbol period (and slot period). The symbol period may be referred to as a symbol length, time direction, or time domain. Further, a frequency direction may be referred to as a frequency domain, resource block, subcarrier, a Bandwidth part (BWP), or the like.

A frequency resource may include a component carrier, a subcarrier, a resource block (RB), a resource block group (RBG), a Bandwidth part (BWP), and the like. A time resource may include a symbol, a slot, a mini-slot, a subframe, a radio frame, a Discontinuous Reception (DRX) period, and the like.

The number of symbols constituting one slot does not necessarily have to be 14 (for example, 28, 56 symbols). In addition, the number of slots per subframe may vary depending on the SCS.

In the radio communication system 10, a synchronization signal block (SSB (SS/PBCH Block)) constituted by a Synchronization Signal (SS) and a downlink Physical Broadcast CHannel (PBCH) may be used.

The SSB is periodically transmitted from the network mainly to detect a cell ID and reception timing, when the UE 200 starts communication. In NR, the SSB is also used to measure the reception quality of each cell. The SSB transmission period (periodicity) may be defined as 5, 10, 20, 40, 80, or 160 milliseconds. For the UE 200 of initial access, a transmission period of 20 milliseconds may be assumed.

Further, the radio communication system 10 may support various operations related to radio resource management (RRM) specified in 3GPP TS38.133. Specifically, the radio communication system 10 may support various quality measurements for the RRM. The RRM may include a measurement based on the SSB and/or a Channel State Information-Reference Signal (CSI-RS), for example. This kind of measurement may be performed in an STMC window according to an SSB based RRM Measurement Timing Configuration (SMTC).

The SMTC may indicate periodicity/duration/offset information of a measurement window for UE RRM measurement for each carrier frequency.

Further, for this kind of measurement, a measurement interval which is referred to as a Measurement Gap (MG) may be applied. The MG may be configured for each UE or for each FR. The length of the MG (MGL) may be longer than the length of an SMTC window. As the MGL, 1.5, 3, 3.5, 4, 5.5, or 6 ms may be configured, for example.

In addition, the radio communication system 10 may support inter cell mobility of the UE 200 by layer 1/layer 2 (L1/L2 inter cell mobility). The UE 200 can transmit and receive uplink (UL)/downlink (DL) channels and/or reference signals with a cell having a Physical Cell ID (PCI) different from that of a serving cell, for example. Therefore, when the Reference Signal Received Power (RSRP) of a non-serving cell is larger than that of a serving cell, the UE 200 can transmit and receive the channels and reference signals with the non-serving cell without handover.

(2) Functional block configuration of radio communication system

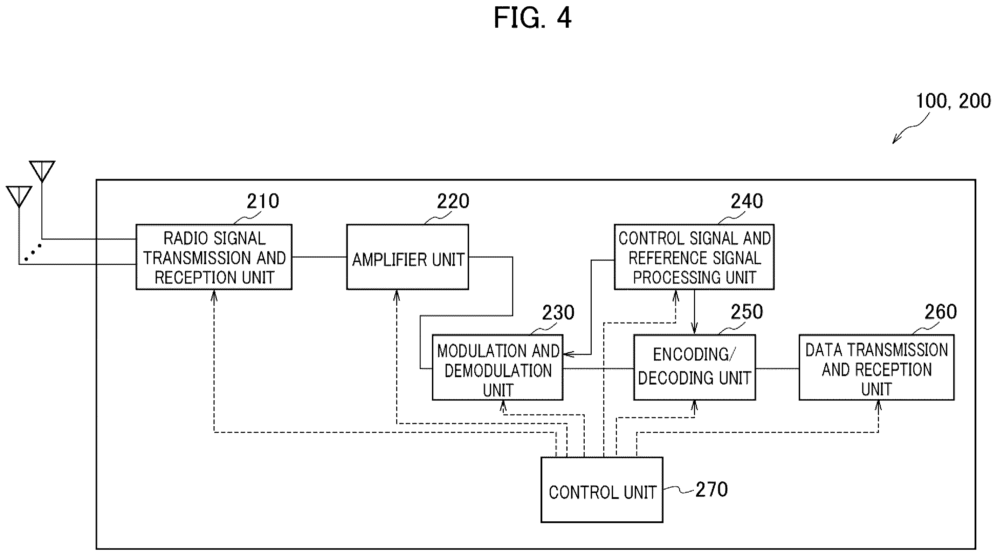

Next, the functional block configuration of the radio communication system 10 will be described. Specifically, the functional block configuration of the UE 200 will be mainly described. FIG. 4 is a functional block diagram of the gNB 100 and UE 200.

As shown in FIG. 4, the UE 200 includes a radio signal transmission and reception unit 210, an amplifier unit 220, a modulation and demodulation unit 230, a control signal and reference signal processing unit 240, an encoding/decoding unit 250, a data transmission and reception unit 260, and a control unit 270.

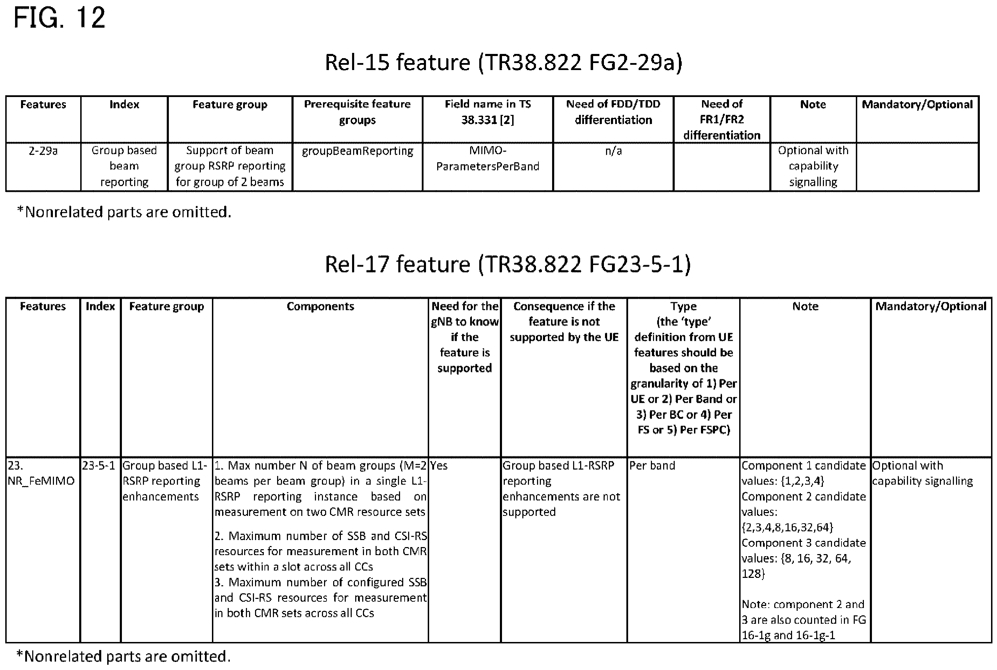

Note that FIG. 4 shows only the main functional blocks relevant to the description of the embodiment, and the UE 200 (gNB 100) has other functional blocks (for example, a power supply unit). Further, FIG. 4 shows the functional block configuration of the UE 200, and see FIG. 12 for the hardware configuration.

The radio signal transmission and reception unit 210 transmits and receives radio signals in accordance with NR. The radio signal transmission and reception unit 210 can support Massive Multiple-Input Multiple-Output (MIMO) in which a beam with higher directivity is generated by controlling radio (RF) signals transmitted from a plurality of antenna elements, carrier aggregation (CA) in which a plurality of component carriers (CCs) are bundled and used, dual connectivity (DC) in which communication is performed simultaneously between the UE and each of the two NG-RAN Nodes, and the like.

The amplifier unit 220 includes a Power Amplifier (PA)/Low Noise Amplifier (LNA) or the like. The amplifier unit 220 amplifies a signal output from the modulation and demodulation unit 230 to a predetermined power level. Further, the amplifier unit 220 amplifies an RF signal output from the radio signal transmission and reception unit 210.

The modulation and demodulation unit 230 performs data modulation/demodulation, transmission power configuration, resource block allocation, and the like for each predetermined communication destination (gNB 100 or the like). In the modulation and demodulation unit 230, Cyclic Prefix-Orthogonal Frequency Division Multiplexing (CP-OFDM)/Discrete Fourier Transform - Spread (DFT-S-OFDM) may be applied. Further, DFT-S-OFDM may be used not only for the uplink (UL) but also for the downlink (DL).

Further, the radio signal transmission and reception unit 210, amplifier unit 220, and modulation and demodulation unit 230 may have a plurality of reception systems (Rx chains). Each reception system may support a different frequency band or frequency range (FR), or may support the same frequency band or FR.

The control signal and reference signal processing unit 240 performs processing for various control signals transmitted and received by the UE 200, and processing for various reference signals transmitted and received by the UE 200.

Specifically, the control signal and reference signal processing unit 240 receives various control signals transmitted from the gNB 100 via a predetermined control channel, such as control signals of a radio resource control layer (RRC), for example. Further, the control signal and reference signal processing unit 240 transmits various control signals to the gNB 100 via the predetermined control channel.

The control signal and reference signal processing unit 240 performs processing using Reference Signals (RSs) such as a Demodulation Reference Signal (DMRS) and a Phase Tracking Reference Signal (PTRS).

The DMRS is a terminal-specific reference signal (pilot signal) known between a base station and a terminal for estimating a fading channel used for data demodulation. The PTRS is a terminal-specific reference signal for the purpose of estimating phase noise, which becomes a problem in a high frequency band.

In addition to the DMRS and PTRS, the reference signal may include a Channel State Information-Reference Signal (CSI-RS), a Sounding Reference Signal (SRS), and a Positioning Reference Signal (PRS) for position information.

Further, the channel includes a control channel and a data channel. The control channel includes a Physical Downlink Control Channel (PDCCH), a Physical Uplink Control Channel (PUCCH), a Random Access Channel (RACH), Downlink Control Information (DCI) including a Random Access Radio Network Temporary Identifier (RA-RNTI), and a Physical Broadcast Channel (PBCH).

Further, the data channel includes a PDSCH, a Physical Uplink Shared Channel (PUSCH), and the like. The data means data transmitted via a data channel.

The control signal and reference signal processing unit 240 may simultaneously receive synchronization signal blocks or reference signals using the plurality of reception systems (Rx chains). In the present embodiment, the control signal and reference signal processing unit 240 constitutes a reception unit.

The control signal and reference signal processing unit 240 may simultaneously receive the SSBs and/or CSI-RSs using the plurality of Rx chains, for example. The reference signal is typically the CSI-RS, but the reference signal may be another reference signal in a downlink direction, or may be overinterpreted as including an SSB.

The control signal and reference signal processing unit 240 may transmit, to the network, capability information of the UE 200. In the present embodiment, the control signal and reference signal processing unit 240 can transmit, to the gNB 100, UE Capability Information on the quality measurement based on the RRM (see FIG. 1).

The encoding/decoding unit 250 performs data division/connection, channel coding/decoding, and the like for each predetermined communication destination (gNB 100 or another gNB).

Specifically, the encoding/decoding unit 250 divides data output from the data transmission and reception unit 260 into predetermined sizes, and performs channel coding on the divided data. Further, the encoding/decoding unit 250 decodes data output from the modulation and demodulation unit 230, and connects the decoded data.

The data transmission and reception unit 260 transmits and receives a Protocol Data Unit (PDU) and a Service Data Unit (SDU). Specifically, the data transmission and reception unit 260 performs assembly/disassembly and the like of PDUs/SDUs in a plurality of layers (a medium access control layer (MAC), a radio link control layer (RLC), a packet data convergence protocol layer (PDCP), and the like). Further, the data transmission and reception unit 260 performs data error correction and re-transmission control based on a Hybrid automatic repeat request (ARQ).

The control unit 270 controls individual functional blocks which constitute the UE 200. In particular, in the present embodiment, the control unit 270 performs control on the RRM. In particular, in the present embodiment, the control unit 270 performs control on the RRM in the FR 2.

The control unit 270 may reduce the number of samples used for measurement, when SSBs or CSI-RSs are received using the plurality of reception systems (Rx chains) in the FR 2 having a frequency band which is higher than that of the FR 1, compared to when an SSB or CSI-RS is received using a single reception system in the FR 2, for example. In other words, the control unit 270 may reduce the number of samples of synchronization signal blocks or reference signals used for measurement, due to the reception of SSBs or CSI-RSs using the plurality of reception systems.

The required number of samples may be specified in the 3GPP specification as a fixed value, or a value according to the number of reception systems may be specified. Further, the number of samples may be determined by the control unit 270, and information on the determined number of samples may be reported to the network as UE Capability Information.

When SSBs or CSI-RSs are received using the plurality of reception systems in the FR 2, the control unit 270 may apply the number of samples specified for the FR 1. The number of samples specified for the FR 1 does not necessarily have to be the same as the number of samples specified for the FR 1. It is sufficient if the number of samples specified for the FR 1 is close to the number of samples specified for the FR 1.

Alternatively, the control unit 270 may apply the number of samples according to the number of reception systems. The number of samples may decrease as the number of reception systems increases, for example.

Further, when SSBs or CSI-RSs are received using the plurality of reception systems in the FR 2, the control unit 270 may apply a common Transmission Configuration Indication (TCI) for the plurality of reception systems.

When the TCI state is commonly managed using the plurality of Rx chains, a Signal to Noise Ratio (SNR) measurement method for determining a known condition of the TCI state may be clearly specified, for example. However, the measurement method may be left to the implementation of the UE 200.

Conversely, the control unit 270 may apply a separate TCI for each of the plurality of reception systems, when SSBs or CSI-RSs are received using the plurality of reception systems in the FR 2.

The control unit 270 may operate according to the existing TCI state switching specification for each Rx chain, for example. Further, the control unit 270 may operate by preferentially using an Rx chain with less delay.

In addition, the gNB 100 (control signal and reference signal processing unit 240) may perform configurations of the SMTC, MG, and the like and may receive CSI reports and UE Capability Information from the UE 200.

(3) Operation of radio communication system

Next, an operation of the radio communication system 10 will be described. Specifically, an operation example on the RRM using the plurality of reception systems (Rx chains) by the UE 200 will be described.

(3.1) Assumptions and issues

As described above, the UE 200 has the plurality of reception systems (Rx chains), and can support simultaneous reception of the plurality of beams BM, and simultaneous measurement of RLM/RRM/MG.

3GPP Release 18 states that the UE 200 has the plurality of Rx chains, and states that the relaxation of the RRM related specification, when the FR 2 is used, will be investigated.

The RRM specification for the FR 2 stated in Releases up to 3GPP Release 17 is based on the following assumptions.

- It is not possible to receive a plurality of beams simultaneously.
- It is not possible to measure RLM/RRM/MG simultaneously.

For this reason, scaling factors have been introduced in various specifications on the RRM and the like. If the UE 200 has the plurality of Rx chains and uses the FR 2, there is a possibility that specification details for the following items may be relaxed.

- L1-RSRP measurement delay (corresponding to Operation Example 1)
- L3 measurement delay (corresponding to Operation Example 2)
- RLM and Beam Failure Detection/Candidate Beam Detection (BFD/CBD) requirements (corresponding to Operation Example 3)
- Scheduling/measurement restrictions (corresponding to Operation Example 4)
- TCI state switching delay with dual TCI (corresponding to Operation Example 5)

L1 may mean layer 1, and L3 may mean layer 3.

(3.2) Operation Example 1

For L1-RSRP measurement delay, 3GPP specifies the required measurement time for each of SSB and CSI-RS based.

Regarding the FR 2, there is a problem that a relatively long time is required due to the following factors.

- The number of samples required for SSB measurement is eight.

- A ceil(maxNumberRxBeam / $N_{res\_per\_set}$) sample is required as the number of samples used for CSI-RS measurement depending on a condition.

- If the SMTC and MG overlap in terms of time, alternate measurement is required.

Based on this kind of situation, the UE 200 may reduce the number of samples used for measurement by performing simultaneous reception using the plurality of Rx chains. Specific examples of reduction will be described later.

The required number of samples may be specified as a fixed value, or may be specified in the specification as a value according to the number of Rx chains. Further, information on the determined (configured) number of samples may be reported to the network as UE Capability Information.

The UE 200 may relax a value of a scaling factor P by simultaneously receiving the beams BM and the like using the plurality of Rx chains. Specific relaxation examples will be described later, but the CSI-RS can be similarly relaxed by replacing an SSB period with a CSI-RS period. The same relaxation measures may be applied to an L1-SINR (Signal-to-Interference plus Noise power Ratio) measurement specification and/or an L1-RSRP measurements for a cell with different PCI from serving cell specification.

In this case, a scaling factor $P_{CDP}$ applied when an SSB occasions overlap between serving cells/non-serving cells may always be one. The determined value of the scaling factor may be reported to the network as UE Capability Information.

(3.2.1) Operation Example 1-1

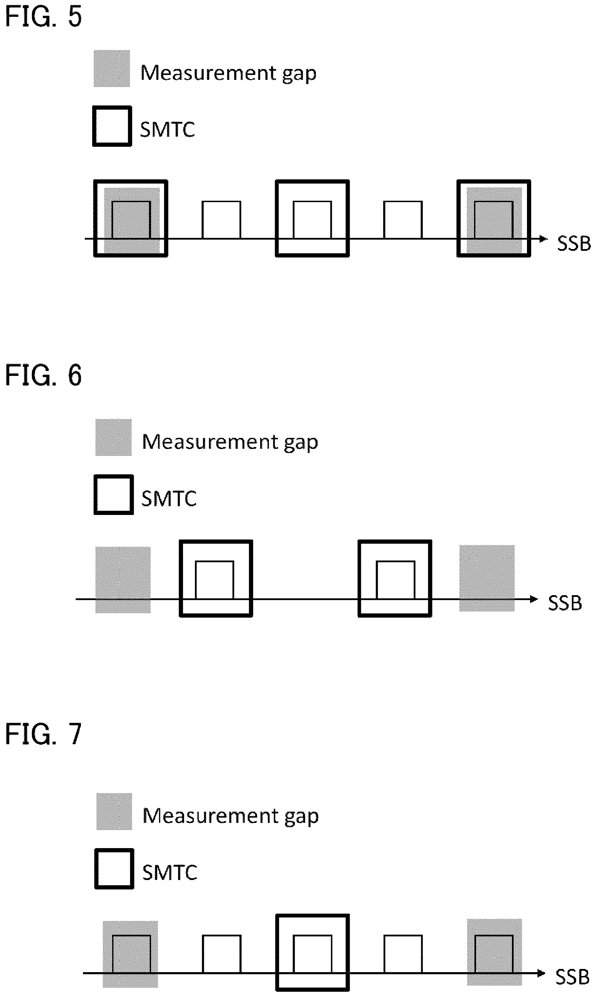

FIG. 5 shows configuration examples of an SSB, an SMTC, and MG according to Operation Example 1-1. Further, 3GPP specifies the scaling factor P as follows (see TS38.133 Sec .5.4.1/9.5.4.2, hereinafter the same).

[Math. 1]

$$P = \frac{P_{SC}}{1 - \frac{T_{SSB}}{T_{SMTCperiod}}},$$ when S SSB is partially overlapped with measurement gap ($T_{SSB} < MGRP$) and SSB is partially overlapped with SMTC occasion ($T_{SSB} < T_{SMTCperiod}$) and SMTC occasion is partially or fully overlapped with measurement gap.

[ $P_{SC} = [2]$ if the SSB measurement occasions of the cell with PCI different from serving cell are fully overlapped with SSB measurement occasions of the serving cell, and $T_{SSB} = T_{SSB\_CDP} < T_{SMTCperiod}$

$P_{SC} = \frac{1}{1 - \frac{T_{SSB}}{T_{SSB\_CDP}}}$ if the SSB measurement occasions of the cell with PCI different from serving cell are fully overlapped with SSB measurement occasions of the serving cell, and $T_{SSB} < T_{SSB\_CDP} < T_{SMTCperiod}$

$P_{SC} = 1$ if the SSB measurement occasions of the cell with PCI different from serving cell are partially overlapped with SSB measurement occasions of the serving cell, and $T_{SSB\_CDP} < T_{SSB}$, and SSB measurement occasions of the serving cell are either fully overlapped with SMTC, or partially overlapped with SMTC ($T_{SSB} \leq T_{SMTC}$).

$T_{SSB\_CDP}$ = SSB periodicity of the cell with PCI different from serving cell]

In the case of the configuration of the SSB, the SMTC, and MG shown in the above specification (as shown in FIG. 5 as an example), it may be the same as a specification in which the SSB and MG in the FR 1 partially overlap. A scaling factor Psc may always be one. Further, a relaxed value may be reported as UE Capability Information.

(3.2.2) Operation Example 1-2

FIG. 6 shows configuration examples of an SSB, an SMTC, and MG according to Operation Example 1-2. Further, 3GPP specifies the scaling factor P as follows.

[Math. 2]

- → P is $P_{sharing\ factor}$, when SSB is not overlapped with measurement gap and SSB is fully overlapped with SMTC period ($T_{SSB}$ = $T_{SMTCperiod}$).

- → $P_{sharing\ factor}$ = 1, if the SSB configured for L1-RSRP measurement outside measurement gap is

  - → not overlapped with the SSB symbols indicated by *SSB-ToMeasure* and 1 data symbol before each consecutive SSB symbols indicated by *SSB-ToMeasure* and 1 data symbol after each consecutive SSB symbols indicated by *SSB-ToMeasure*, given that *SSB-ToMeasure* is configured, where the *SSB-ToMeasu* is the union set of *SSB-ToMeasure* from all the configured measurement objects merged on the same servi carrier, and

  - → not overlapped with the RSSI symbols indicated by *ss-RSSI-Measurement* and 1 data symbol before each RSSI symbol indicated by *ss-RSSI-Measurement* and 1 data symbol after each RSSI symbol indicated by *ss-RSSI-Measurement*, given that *ss-RSSI-Measurement* is configured,

- → $P_{sharing\ factor}$ = 3, otherwise.

In the case of the configuration of the SSB, the SMTC, and MG shown in the above specification (as shown in FIG. 6 as an example), a $P_{sharing\ factor}$ may always be one. Further, a relaxed value may be reported as UE Capability Information.

(3.2.3) Operation Example 1-3

FIG. 7 shows configuration examples of an SSB, an SMTC, and MG according to Operation Example 1-3. Further, 3GPP specifies the scaling factor P as follows.

[Math. 3]

- → $P = \dfrac{P_{SC}}{1 - \frac{T_{SSB}}{xRP} \cdot \frac{T_{SSB}}{T_{SMTCperiod}}}$, when SSB is partially overlapped with GAP and SSB is partially overlapped with SMTC occasion ($T_{SSB}$ < $T_{SMTCperiod}$) and SMTC occasion is not overlapped with GAP and

  - → $T_{SMTCperiod}$ ≠ xRP or

  - → $T_{SMTCperiod}$ = xRP and $T_{SSB}$ < 0.5*$T_{SMTCperiod}$

It may be the same as a specification in which the SSB and MG in the FR 1 partially overlap. The scaling factor $P_{sc}$ may always be one. Further, a relaxed value may be reported as UE Capability Information.

(3.2.4) Operation Example 1-4

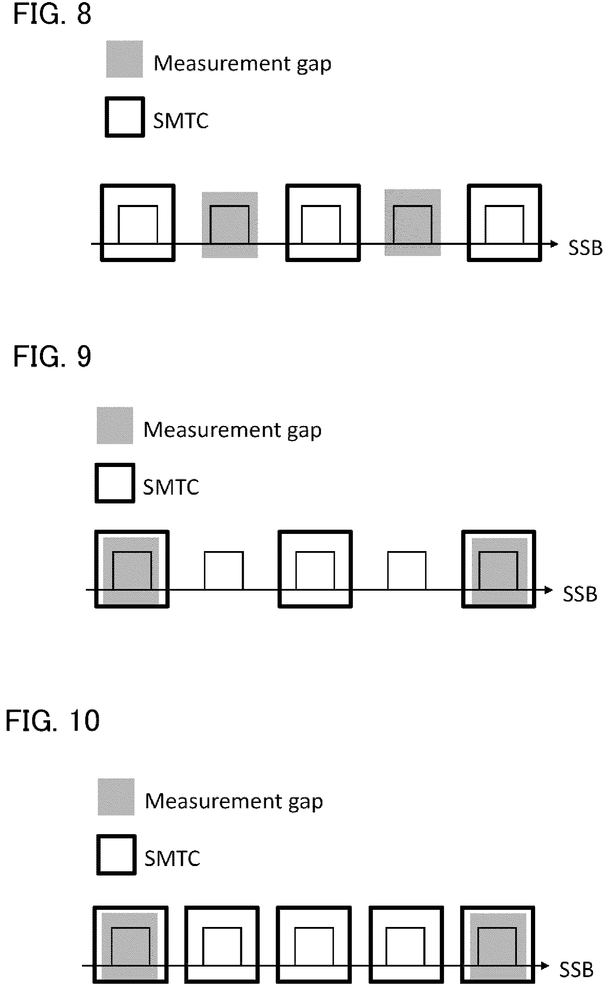

FIG. 8 shows configuration examples of an SSB, an SMTC, and MG according to Operation Example 1-4. Further, 3GPP specifies the scaling factor P as follows.

[Math. 4]

- → P is $\dfrac{P_{sharing\ factor}}{1 - \frac{T_{SSB}}{xRP}}$, when SSB is partially overlapped with GAP and SSB is partially overlapped with SMTC occasion ($T_{SSB}$ < $T_{SMTCperiod}$) and SMTC occasion is not overlapped with GAP and $T_{SMTCperiod}$ = xRP and $T_{SSB}$ = 0.5*$T_{SMTCperiod}$

It may be the same as a specification in which the SSB and MG in the FR 1 partially overlap. The $P_{sharing\ factor}$ may always be one. Further, a relaxed value may be reported as UE Capability Information.

(3.2.5) Operation Example 1-5

FIG. 9 shows configuration examples of an SSB, an SMTC, and MG according to Operation Example 1-5. Further, 3GPP specifies the scaling factor P as follows.

[Math. 5]

$$P = \frac{P_{SC}}{1 - \frac{T_{SSB}}{T_{SMTCperiod}}}, \text{ when SSB is partially overlapped with GAP } (T_{SSB} < xRP) \text{ and SSB is partially overlapped with SMTC occasion } (T_{SSB} < T_{SMTCperiod}) \text{ and SMTC occasion is partially or fully overlapped with GAP.}$$

It may be the same as a specification in which the SSB and MG in the FR 1 partially overlap. The scaling factor $P_{sc}$ may always be one. Further, a relaxed value may be reported as UE Capability Information.

(3.2.6) Operation Example 1-6

FIG. 10 shows configuration examples of an SSB, an SMTC, and MG according to Operation Example 1-6. Further, 3GPP specifies the scaling factor P as follows.

[Math. 6]

$$P \text{ is } \frac{P_{sharing\ factor}}{1 - \frac{T_{SSB}}{xRP}}, \text{ when SSB is partially overlapped with measurement gap and SSB is fully overlapped with SMTC occasion } (T_{SSB} = T_{SMTCperiod}) \text{ and SMTC occasion is partially overlapped with GAP } (T_{SMTCperiod} < xRP)$$

It may be the same as a specification in which the SSB and MG in the FR 1 partially overlap. The $P_{sharing\ factor}$ may always be one. Further, a relaxed value may be reported as UE Capability Information.

(3.3) Operation Example 2

3GPP mainly specifies the following scaling factors for L3 measurement related to L3 measurement delay.
- N1 during Cell reselection

- $K_{layer1\_measurement}$ during Intra freq. measurement/inter-freq. measurement without gap

N1 is specified in 3GPP TS38.133 Sec 4.2.2.2, and can take a value such as 3, 4, 5, or 8 in the FR 2. Further, $K_{layer1\_measurement}$ is specified as follows.

[Math. 7]

→ For FR2,

→ $K_{layer1\_measurement}=1,$

- → if all of the reference signals configured for RLM, BFD, CBD or L1-RSRP for beam reporting on any FR2 serving frequency in the same band outside measurement gap are not fully overlapped by intra-frequency SMTC occasions, or

- → if all of the reference signal configured for RLM, BFD, CBD or L1-RSRP for beam reporting on any FR2 serving frequency in the same band outside measurement gap and fully-overlapped by intra-frequency SMTC occasions are not overlapped with any of the SSB symbols and the RSSI symbols, and 1 symbol before each consecutive SSB symbols and the RSSI symbols, and 1 symbol after each consecutive SSB symbols and the RSSI symbols, given that *SSB-ToMeasure* and *SS-RSSI-Measurement* are configured, where SSB symbols are indicated by the union set of SSB-ToMeasure from all the configured measurement objects on the same serving carrier which can be merged, and RSSI symbols are indicated by *SS-RSSI-Measurement;*

→ $K_{layer1\_measurement}=1.5,$ otherwise.

→ If the above-mentioned reference signal configured for L1-RSRP measurement is aperiodic CSI-RS resource, longer cell identification delay would be expected.

N1 and $K_{layer1\_measurement}$ may take large values due to the inability to perform simultaneous measurement in the FR 2.

Therefore, the UE 200 may relax (reduce) values of N1 and $K_{layer1\_measurement}$ by simultaneously receiving the beams BM and the like using the plurality of Rx chains.

A value of N1 may be specified as a fixed value, or may be specified in the specification as a value according to the number of Rx chains. A value of $K_{layer1\_measurement}$ may always be one. Further, configured values of N1 and/or $K_{layer1\_measurement}$ may be reported to the network as UE Capability Information.

(3.4) Operation Example 3

For Radio Link Monitoring (RLM) and BFD/CBD requirements, 3GPP specifies the required measurement time for each of SSB and CSI-RS based.

Regarding the FR 2, there is a problem that a relatively long time is required due to the following factors.

- The number of samples required for SSB measurement is eight.

- If the SMTC and MG overlap in terms of time, alternate measurement is required.

In this kind of beam failure detection, and subsequent candidate beam detection, the UE 200 may reduce the number of samples used for measurement by performing simultaneous reception using the plurality of Rx chains.

The required number of samples may be specified as a fixed value, or may be specified in the specification as a value according to the number of Rx chains. Further, information on the determined (configured) number of samples may be reported to the network as UE Capability Information.

The UE 200 may relax a value of the scaling factor P by simultaneously receiving the beams BM and the like using the plurality of Rx chains (as in Operation Example 1).

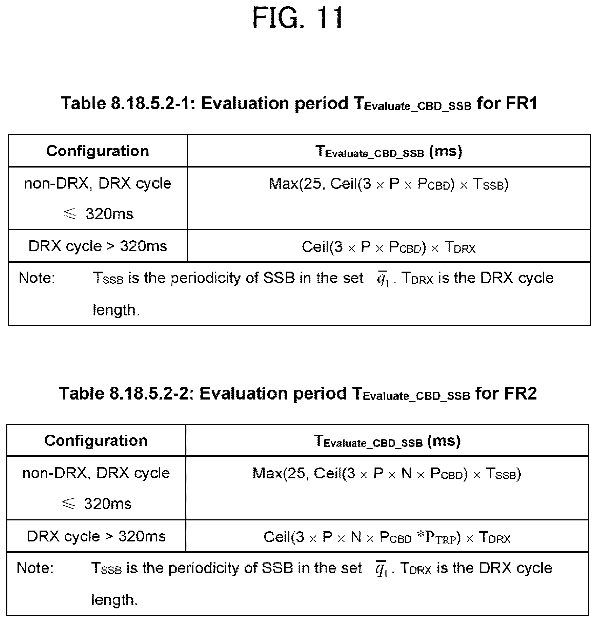

Specifically, the UE 200 may relax a value of a scaling factor $P_{TRP}$. FIG. 11 shows the configuration of an evaluation period ($T_{Evaluate\_CBD\_SSB}$ / $T_{Evaluate\_CBD\_CSI-RS}$) during which the scaling factor $P_{TRP}$ is referred. Sec 8.18.5.2 and 8.18.6.2 in 3GPP TS38.133 specifies $T_{Evaluate\_CBD\_SSB}$ / $T_{Evaluate\_CBD\_CSI-RS}$.

Further, this kind of relaxation may be applied not only to BFD/CBD, when a single transmission/reception point (TRP) is used, but also to BFD/CBD when a plurality of TRPs are used. In the case of the BFD/CBD, when the plurality of TRPs are used, the scaling factor $P_{TRP}$ used when resources for each TRP overlap may always be one. A value of the scaling factor $P_{TRP}$ may be reported to the network as UE Capability Information.

(3.5) Operation Example 4

Regarding Scheduling/measurement restrictions, as described above, Releases up to 3GPP Release 17 assume that only one beam can be transmitted and received simultaneously. Therefore, there has been a problem that a plurality of signals (data) may not be transmitted and received simultaneously in terms of time.

The same restrictions apply to all of RLM, L1-RSRP measurement, L3-measurement, BFD/CBD, and L1-SINR measurement.

Therefore, the UE 200 may relax the restrictions on scheduling and/or measurement of the UE by simultaneously receiving the beams BM and the like using the plurality of Rx chains, and then applying a specification which is similar to that of the FR 1 (that is, no restriction) for scheduling/measurement restriction specifications.

(3.6) Operation Example 5

Regarding TCI state switching delay with dual TCI, there is no clear specification on how to manage TCI state, when simultaneous reception using the plurality of Rx chains is assumed. Therefore, the problem is which of the plurality of Rx chains should be used to manage the TCI state.

Therefore, when the TCI state is managed using the plurality of Rx chains, specifications may be set for each of the following scenarios.

- When the TCI state is commonly managed using the plurality of Rx chains:
  the SNR measurement method for determining the known condition of the TCI state may be clearly specified, or left to the implementation of the UE 200.
- When the TCI state is separately managed using each of the plurality of Rx chains:
  the operation according to the existing TCI state switching specification for each Rx chain may be performed, or the operation in which an Rx chain with less delay is preferentially used may be performed.

(3.7) Modified Example

The above operation examples may be based on the use of a group-based beam reporting function. Specifically, it may be assumed that the groupBasedBeamReporting function, which is one of MIMO features, is used.

If the groupBasedBeamReporting is used, the network can cause the UE to report information on "beam pairs that can be simultaneously received" as L1-RSRP.

FIG. 12 shows a list (example) of groupBasedBeamReporting functions. Specifically, FIG. 12 shows examples of a list of functions stated in 3GPP Release-15, and a list of functions stated in Release-17. In Release-15, only a single TRP (Single TRP) is targeted, but in Release-17, application is also possible to multiple TRPs (Multi TRP). Note that the contents of the lists are merely examples, and some parts may be different.

If these kinds of groupBasedBeamReporting functions are used, it is possible to ensure the ability to simultaneously receive signals coming from different directions. Therefore, in order to determine whether the above-described operations are applicable, it may be assumed that the UE has the Capability of supporting the functions.

The Capability may be groupBasedBeamReporting functions stated in Release-15, groupBasedBeamReporting functions stated in Release-17, or the functions stated in both releases.

(4) Operation and effect

According to the above embodiment, the following action and effect can be obtained. Specifically, the UE 200 may reduce the number of samples used for measurement when SSBs or CSI-RSs are received using the plurality of reception systems (Rx chains), compared to when an SSB or CSI-RS is received using a single reception system in the FR 2.

This can relax (reduce) various scaling factors applied to the FR 2 related to the RRM. As a result, the UE 200 can perform an operation related to faster measurement, even when a high frequency band such as the FR 2 is used.

Further, the UE 200 may apply a common Transmission Configuration Indication (TCI) for the plurality of reception systems, when the UE 200 receives SSBs or CSI-RSs using the plurality of reception systems in the FR 2. Conversely, the UE 200 may apply a separate TCI for each of the plurality of reception systems, when the UE 200 receives SSBs or CSI-RSs using the plurality of reception systems in the FR 2.

Therefore, handling of the TCI state, when the UE 200 receives SSBs or CSI-RSs using the plurality of reception systems, is clarified, and the UE 200 can perform an operation related to the RRM stably and reliably, even when the plurality of reception systems are used.

(5) Other embodiments

Although an embodiment has been described above, it is obvious to those skilled in the art that the present invention is not limited to the description of the embodiment and that various modifications and improvements thereof are possible.

In the above-described embodiment, a description has been given regarding an operation on the relaxation of various scaling factors applied to the FR 2 related to the RRM, for example. However, the FR 2 may be interpreted as either the FR 2-1 or the FR 2-2, or both the FR 2-1 and the FR 2-2. In addition, a frequency range other than the FR 2 may be targeted.

In the above disclosure, terms such as configure, activate, update, indicate, enable, specify, and select may be read interchangeably. Similarly, terms such as link, associate, correspond, and map may be read interchangeably, and terms such as allocate, assign, monitor, and map may be read interchangeably.

In addition, terms such as specific, dedicated, UE-specific, and UE-dedicated may be read interchangeably. Similarly, terms such as common, shared, group-common, UE-common, and UE-shared may be read interchangeably.

In this disclosure, terms such as "precoding," "precoder," "weight (precoding weight)," "Quasi-Co-Location (QCL)," "Transmission Configuration Indication state (TCI state)," "spatial relation," "spatial domain filter," "transmit power," "phase rotation," "antenna port," "antenna port group," "layer," "number of layers," "rank," "resource," "resource set," "resource group," "beam," "beam width," "beam angle," "antenna," "antenna element," "panel," and the like may be used interchangeably.

The block diagram (FIG. 4) used in the description of the above-described embodiment illustrates blocks in units of functions. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

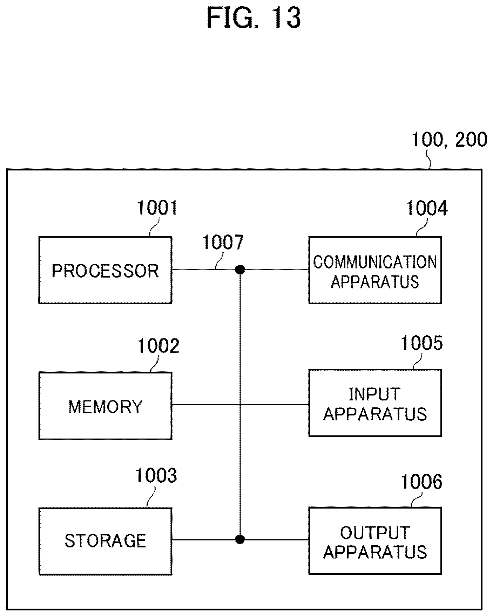

Further, the above-described gNB 100 and UE 200 (the devices) may function as a computer that performs processing of a radio communication method of the present disclosure. FIG. 13 is a diagram illustrating an example of a hardware configuration of the device. As illustrated in FIG. 13, the device may be configured as a computer device including a processor 1001, a memory 1002, a storage 1003, a communication device 1004, an input device 1005, an output device 1006, a bus 1007, and the like.

Furthermore, in the following description, the term "device" can be read as meaning circuit, device, unit, or the like. The hardware configuration of the device may include one or more devices illustrated in the figure or may not include some of the devices.

Each of the functional blocks of the device (FIG. 4) is implemented by means of any of hardware elements of the computer device or a combination of the hardware elements.

Each function in the device is realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus." The above recording medium may be a database including the memory 1002 and/or the storage 1003, a server, or any other appropriate medium.

The communication apparatus 1004 is hardware (transmitting/receiving device) for allowing inter-computer communication via at least one of wired and wireless networks, and may be referred to as, for example, a "network device," a "network controller," a "network card," a "communication module," and so on.

The communication apparatus 1004 may be configured to include a high frequency switch, a duplexer, a filter, a frequency synthesizer, and so on in order to realize, for example, at least one of frequency division duplex (FDD) and time division duplex (TDD).

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the device may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New Radio (NR), WCDMA(registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these. According to the above, a case is described in which there is a single network node other than the base station 10. However, a combination of multiple other network nodes may be considered (e.g., MME and S-GW).

Information or signals (information and the like) may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any of a one of various different technologies. For example, data, an instruction, a command, information, a signal, a bit, a symbol, a chip, or the like, described throughout the present application, may be represented by a voltage, an electric current, electromagnetic waves, magnetic fields, magnetic particle, optical fields, a photon, or a combination thereof.

It should be noted that a term used in the present specification and/or term required for understanding of the present specification may be replaced by a term having the same or similar meaning. For example, a channel and a symbol may be a signal (signaling). Further a signal may also be a message. Further, the component carrier (CC) may be referred to as a carrier frequency, cell, frequency carrier, or the like.

As used in the present disclosure, the terms "system" and "network" are used interchangeably.

Furthermore, the information, parameters, and the like, described in the present disclosure may be expressed using absolute values, relative values from a predetermined values, or they may be expressed using corresponding different information. For example, a radio resource may be what is indicated by an index.

The names used for the parameters described above are not used as limitation. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells (also called sectors). When a base station accommodates a plurality of cells, the entire coverage area of the base station can be partitioned into multiple smaller areas, and each smaller area can provide communication services through base station subsystems (for example, indoor small base stations (Remote Radio Heads (RRHs))).

The term "cell" or "sector" refers to part of or the entire coverage area of at least one of a base station and a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a mobile station (hereinafter, a user terminal). For example, each aspect/embodiment of the present disclosure may be applied to the structure that replaces a communication between a base station and a mobile station with a communication between a plurality of mobile stations (for example, which may be referred to as "Device-to-Device (D2D)," "Vehicle-to-Everything (V2X)," and the like). In this case, mobile stations may have the functions of the base stations described above. The words such as "uplink" and "downlink" may be interpreted as the words corresponding to the terminal-to-terminal communication (for example, "side"). For example, an uplink channel, a downlink channel and so on may be interpreted as a sidelink channel (or sidelink).

Likewise, the mobile station in the present disclosure may be interpreted as base station. In this case, the base station may have the functions of the mobile station described above.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. **In** other words, the phrase "based on" (or "on the basis of") means both "based only on" and "based at least on" ("only on the basis of" and "at least on the basis of").

"Means" included in the configuration of each of the above apparatuses may be replaced by "parts", "circuits", "devices", etc.

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

**In** the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, where an article is added by translation, for example "a", "an", and "the", the disclosure may include that the noun following these articles is plural.

As used herein, the term "determining" may encompasses a wide variety of actions. For example, "determining" may be regarded as judging, calculating, computing, processing, deriving, investigating, looking up (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing and the like. That is, "determining" may be regarded as a certain type of action related to determining.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

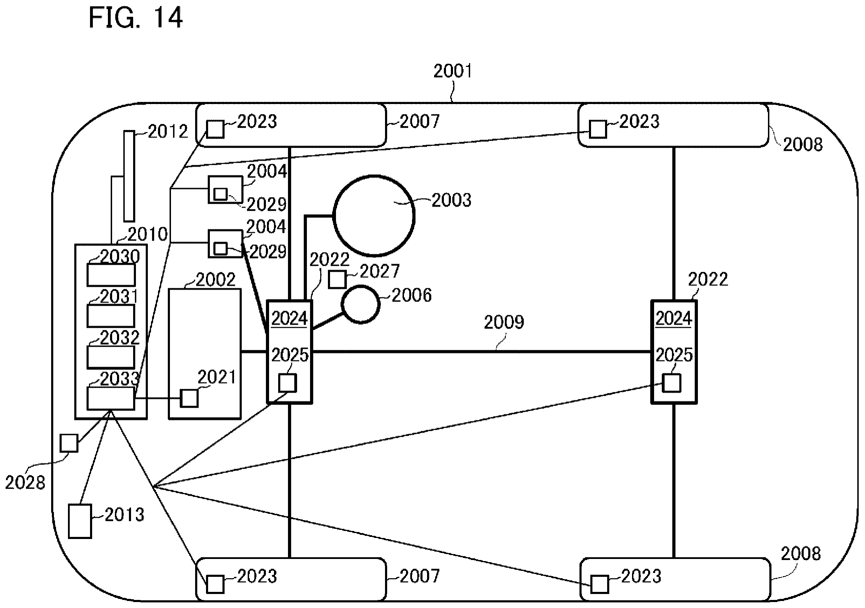

FIG. 14 shows a configuration example of a vehicle 2001. As shown in FIG. 14, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user. The electronic control unit 2010 includes a microprocessor 2031, a memory (ROM, RAM) 2032, and a communication port (IO port) 2033. The electronic control unit 2010 receives signals from the various sensors 2021-2027 provided in the vehicle. The electronic control unit 2010 may be referred to as an ECU (Electronic control unit).

The signals from the various sensors 2021 to 2028 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 1 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 1 via a communication port. For example, the communication module 2013 transmits and receives data via a communication port 2033, to and from the drive unit 2002, the steering unit 2003, the accelerator pedal 2004, the brake pedal 2005, the shift lever 2006, the left and right front wheels 2007, the left and right rear wheels 2008, the axle 2009, the microprocessor 2031 and the memory (ROM, RAM) 2032 in the electronic control unit 2010, and sensors 2021 to 2028 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal coming from a current sensor and input to the electronic control unit 2010 to an external device via radio communication. Further, the communication module 2013 transmits a rotation speed signal of a front wheel and a rear wheel acquired by the revolution sensor 2022, a pressure signal of a front wheel and a rear wheel acquired by a pneumatic sensor 2023, a speed signal of a vehicle acquired by a vehicle speed sensor 2024, an acceleration signal acquired by an acceleration sensor 2025, an accelerator pedal pressed-amount signal acquired by an accelerator pedal sensor 2029, a brake pedal pressed-amount signal acquired by a brake pedal sensor 2026, an operation signal of the shift lever acquired by a shift lever sensor 2027, and a detection signal acquired by an object detection sensor 2028 for detecting obstacles, vehicles, pedestrians, and the like input to the electronic control unit 2010 to an external device via radio communication.

The communication module 2013 receives various types of information (traffic information, signal information, inter-vehicle information, etc.) transmitted from the external devices and displays the received information on the information service unit 2012 provided in the vehicle. **In** addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021-2028, etc., mounted in the vehicle 2001.

(Supplementary notes)

The above disclosure may be expressed as follows.

A first feature is a terminal including: a reception unit that simultaneously receives a synchronization signal block or a reference signal using a plurality of reception systems; and a control unit that reduces a number of samples used for measurement, when the synchronization signal block or the reference signal is received using the plurality of reception systems in a second frequency range having a frequency band which is higher than a frequency band of a first frequency range, compared to when the synchronization signal block or the reference signal is received using a single reception system in the second frequency range, in which the control unit reduces the number of samples when a group-based beam reporting function is applied.

In the first feature, a second feature is the terminal in which the control unit applies the number of samples specified for the first frequency range.

In the first or second feature, a third feature is the terminal in which the control unit applies the number of samples according to the number of the reception systems.

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

Reference Signs List

10 Radio communication system
20 NG-RAN
100 gNB
200 UE
210 Radio signal Transmission and reception unit
220 Amplifier unit
230 Modulation and demodulation unit
240 Control signal and reference signal processing unit
250 Encoding/decoding unit
260 Data transmission and reception unit
270 Control unit
1001 Processor
1002 Memory
1003 Storage
1004 Communication device
1005 Input device
1006 Output device
1007 Bus
2001 Vehicle
2002 Drive unit
2003 Steering unit
2004 Accelerator pedal
2005 Brake pedal
2006 Shift lever
2007 Left and right front wheels
2008 Left and right rear wheels
2009 Axle
2010 Electronic control unit
2012 Information service unit
2013 Communication module
2021 Current sensor
2022 Revolution sensor
2023 Pneumatic sensor
2024 Vehicle speed sensor

2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port

**Claims**

1. A terminal comprising:

   a reception unit that simultaneously receives a synchronization signal block or a reference signal using a plurality of reception systems; and
   a control unit that reduces a number of samples used for measurement, when the synchronization signal block or the reference signal is received using the plurality of reception systems in a second frequency range having a frequency band which is higher than a frequency band of a first frequency range, compared to when the synchronization signal block or the reference signal is received using a single reception system in the second frequency range, wherein
   the control unit reduces the number of samples, when a group-based beam reporting function is applied.

2. The terminal according to claim 1, wherein
   the control unit applies the number of samples specified for the first frequency range.

3. The terminal according to claim 1, wherein
   the control unit applies the number of samples according to the number of the reception systems.

4. A terminal comprising:

   a reception unit that simultaneously receives a synchronization signal block or a reference signal using a plurality of reception systems; and
   a control unit that applies a common transmission configuration indication for the plurality of reception systems, when the synchronization signal block or the reference signal is received using the reception systems in a second frequency range having a frequency band which is higher than a frequency band of a first frequency range, wherein
   the control unit applies the common transmission configuration indication for the plurality of reception systems, when a group-based beam reporting function is applied.

5. A terminal comprising:

   a reception unit that simultaneously receives a synchronization signal block or a reference signal using a plurality of reception systems; and
   a control unit that applies a separate transmission configuration indication for each of the plurality of reception systems, when the synchronization signal block or the reference signal is received using the plurality of reception systems in a second frequency range having a frequency band which is higher than a frequency band of a first frequency range, wherein
   the control unit applies the separate transmission configuration indication for each of the plurality of reception systems, when a group-based beam reporting function is applied.

6. A radio communication method comprising:

   a step of simultaneously receiving a synchronization signal block or a reference signal using a plurality of reception systems; and
   a step of reducing a number of samples used for measurement, when the synchronization signal block or the reference signal is received using the plurality of reception systems in a second frequency range having a frequency band which is higher than a frequency band of a first frequency range, compared to when the synchronization signal block or the reference signal is received using a single reception system in the second frequency range, wherein
in the step of reducing the number of samples, the number of samples is reduced when a group-based beam reporting function is applied.

# FIG. 1

# FIG. 2

FR1
{15, 30, 60} kHz SCS
5~100 MHz BW

FR2-1
{60, 120, (240)} kHz
SCS
50~400 MHz BW

FR2-2

f

0.41
GHz

1 GHz

7.125
GHz

10 GHz

24.25
GHz

52.6
GHz

71 GHz

100 GHz

EP 4 668 821 A1

**FIG. 3**

Radio Frame (10ms)

| #0 | #1 | #2 | #3 | #4 | #5 | #6 | #7 | #8 | #9 |

Sub frame (1ms)

Slot (14-symbol)

SCS

15kHz

| #0 | #1 | #2 | #3 | #4 | #5 | #6 | #7 | #8 | #9 | #10 | #11 | #12 | #13 |

Slot (14-symbol)

30kHz

Slot (14-symbol)

60kHz

Slot (14-symbol)

120kHz · · ·

Slot (14-symbol)

240kHz · · ·

480kHz · · ·

960kHz · · ·

EP 4 668 821 A1

FIG. 4

100, 200

RADIO SIGNAL
TRANSMISSION AND
RECEPTION UNIT — 210

AMPLIFIER UNIT — 220

CONTROL SIGNAL AND
REFERENCE SIGNAL
PROCESSING UNIT — 240

MODULATION AND
DEMODULATION
UNIT — 230

ENCODING/
DECODING UNIT — 250

DATA TRANSMISSION
AND RECEPTION
UNIT — 260

CONTROL UNIT — 270

EP 4 668 821 A1

FIG. 5

FIG. 6

FIG. 7

# FIG. 8

# FIG. 9

# FIG. 10

EP 4 668 821 A1

# FIG. 11

### Table 8.18.5.2-1: Evaluation period $T_{Evaluate\_CBD\_SSB}$ for FR1

| Configuration | $T_{Evaluate\_CBD\_SSB}$ (ms) |
|---|---|
| non-DRX, DRX cycle $\leqslant$ 320ms | Max(25, Ceil(3 × P × P$_{CBD}$) × T$_{SSB}$) |
| DRX cycle > 320ms | Ceil(3 × P × P$_{CBD}$) × T$_{DRX}$ |
| Note: T$_{SSB}$ is the periodicity of SSB in the set $\overline{q_1}$. T$_{DRX}$ is the DRX cycle length. | |

### Table 8.18.5.2-2: Evaluation period $T_{Evaluate\_CBD\_SSB}$ for FR2

| Configuration | $T_{Evaluate\_CBD\_SSB}$ (ms) |
|---|---|
| non-DRX, DRX cycle $\leqslant$ 320ms | Max(25, Ceil(3 × P × N × P$_{CBD}$) × T$_{SSB}$) |
| DRX cycle > 320ms | Ceil(3 × P × N × P$_{CBD}$ *P$_{TRP}$) × T$_{DRX}$ |
| Note: T$_{SSB}$ is the periodicity of SSB in the set $\overline{q_1}$. T$_{DRX}$ is the DRX cycle length. | |

28

# FIG. 12

## Rel-15 feature (TR38.822 FG2-29a)

| Features | Index | Feature group | Prerequisite feature groups | Field name in TS 38.331 [2] | Need of FDD/TDD differentiation | Need of FR1/FR2 differentiation | Note | Mandatory/Optional |
|---|---|---|---|---|---|---|---|---|
| 2-29a | Group based beam reporting | Support of beam group RSRP reporting for group of 2 beams | groupBeamReporting | MIMO-ParametersPerBand | n/a | | Optional with capability signalling | |

*Nonrelated parts are omitted.

## Rel-17 feature (TR38.822 FG23-5-1)

| Features | Index | Feature group | Components | Need for the gNB to know if the feature is supported | Consequence if the feature is not supported by the UE | Type (the 'type' definition from UE features should be based on the granularity of 1) Per UE or 2) Per Band or 3) Per BC or 4) Per FS or 5) Per FSPC) | Note | Mandatory/Optional |
|---|---|---|---|---|---|---|---|---|
| 23. NR_FeMIMO | 23-5-1 | Group based L1-RSRP reporting enhancements | 1. Max number N of beam groups (M=2 beams per beam group) in a single L1-RSRP reporting instance based on measurement on two CMR resource sets<br>2. Maximum number of SSB and CSI-RS resources for measurement in both CMR sets within a slot across all CCs<br>3. Maximum number of configured SSB and CSI-RS resources for measurement in both CMR sets across all CCs | Yes | Group based L1-RSRP reporting enhancements are not supported | Per band | Component 1 candidate values: {1,2,3,4} Component 2 candidate values: {2,3,4,8,16,32,64} Component 3 candidate values: {8, 16, 32, 64, 128}<br><br>Note: component 2 and 3 are also counted in FG 16-1g and 16-1g-1 | Optional with capability signalling |

*Nonrelated parts are omitted.

# FIG. 13

100, 200

1001     1004

| PROCESSOR | | COMMUNICATION APPARATUS |

1007

1002     1005

| MEMORY | | INPUT APPARATUS |

1003     1006

| STORAGE | | OUTPUT APPARATUS |

FIG. 14

EP 4 668 821 A1

## INTERNATIONAL SEARCH REPORT

International application No.

**PCT/JP2023/005607**

**A.    CLASSIFICATION OF SUBJECT MATTER**

*H04W 16/28*(2009.01)i; *H04W 24/10*(2009.01)i
FI:    H04W16/28; H04W24/10

According to International Patent Classification (IPC) or to both national classification and IPC

**B.    FIELDS SEARCHED**

Minimum documentation searched (classification system followed by classification symbols)

H04W16/28; H04W24/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | NTT DOCOMO, INC. Discussions on FR2 multi Rx chain DL reception [online]. 3GPP TSG RAN WG4 #104bis-e R4-2215710. 30 September 2022 sections 1, 2.3, 2.3.1 | 1, 6 |
| A | | 2-4 |
| Y | HUAWEI. HISILICON. Discussion on RRM general aspects for R18 FR2 multi-Rx chain DL reception [online]. 3GPP TSG RAN WG4 #105 R4-2219251. 07 November 2022 section 2.1 | 1, 6 |
| A | | 2-4 |
| X | QUALCOMM INCORPORATED. Impacts on RRM to support FR2 multi-Rx chain based 4 layer DL reception from multi-TRP [online]. 3GPP TSG RAN WG4 #104bis-e R4-2216866. 30 September 2022 section 2 | 5 |
| A | | 2-4 |

☐ Further documents are listed in the continuation of Box C.      ☐ See patent family annex.

| | | |
|---|---|---|
| * | Special categories of cited documents: | |
| "A" | document defining the general state of the art which is not considered to be of particular relevance | "T"  later document published after the international filing date or priority date and not in conflict with the application but cited to understand the principle or theory underlying the invention |
| "E" | earlier application or patent but published on or after the international filing date | "X"  document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"  document member of the same patent family |

| Date of the actual completion of the international search | Date of mailing of the international search report |
|---|---|
| **24 August 2023** | **05 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**REFERENCES CITED IN THE DESCRIPTION**

**Non-patent literature cited in the description**

- Requirement for NR frequency range 2 (FR2) multi-Rx chain DL reception. *RP-221753, 3GPP TSG RAN Meeting #96, 3GPP*, June 2022